# EUROPÄISCHE PATENTANMELDUNG

(11) **EP 3 196 135 A1**
(43) Veröffentlichungstag der Anmeldung: **26.07.2017**
(21) Anmeldenummer: 17152386.3
(22) Anmeldetag: 20.01.2017
(51) Int. Cl.: B65B 33/04

(54) **VORRICHTUNG ZUM AUFBRINGEN EINER FOLIE AUF EIN KRAFTFAHRZEUG**

(30) Priorität: 22.01.2016 DE 202016100285 U
(71) Anmelder: Miller, Eren, 33378 Rheda-Wiedenbrück (DE)
(72) Erfinder: Miller, Eren, 33378 Rheda-Wiedenbrück (DE)
(74) Vertreter: Ter Meer Steinmeister & Partner

(57) **Zusammenfassung**

Vorrichtung (10) zum Aufbringen einer Folie auf ein Kraftfahrzeug, gekennzeichnet durch
- eine Ebene (12) mit einer Stellfläche zur Aufnahme des Kraftfahrzeugs (16),
- einen Rahmen (18), der aus Rahmenleisten (20, 22) zusammengesetzt ist, zwischen denen eine Folie (24) gespannt ist und aus einer über die Ebene (12) angehobenen Position zur Ebene (12) hin absenkbar ist, und
- eine Saugeinrichtung zum Ansaugen von Luft nach unten durch mindestens eine Saugöffnung, die in oder unter der Ebene (12) angeordnet ist.

## Beschreibung

Die vorliegende Erfindung betrifft eine Vorrichtung zum Aufbringen einer Folie auf ein Kraftfahrzeug.

Bei einer solchen Folie kann es sich insbesondere um eine Dekorfolie handeln, die zur Dekoration oder auch zu Werbezwecken auf die Karosserie eines Kraftfahrzeugs aufgebracht wird. Hierdurch lassen sich die Fahrzeuge individuell gestalten, ohne dass eine Umlackierung erforderlich ist. Ein rückstandsfreies Entfernen der Folie ist nach Gebrauch problemlos möglich.

Die Folie muss glatt und blasenfrei auf den Lack aufgebracht werden. Dies war bisher nur in aufwendiger Handarbeit möglich. Bisher standen keine Mittel zur Verfügung, um diesen Vorgang schneller und einfacher zu gestalten.

Die Aufgabe der vorliegenden Erfindung ist es daher, Mittel zum Aufbringen einer Folie auf ein Kraftfahrzeug zur Verfügung zu stellen, die diesen Vorgang erleichtern und zeitlich abkürzen. Insbesondere ist eine zumindest teilweise Automatisierung des Vorgangs erwünscht.

Diese Aufgabe wird erfindungsgemäß durch eine Vorrichtung zum Aufbringen einer Folien auf ein Kraftfahrzeug mit den Merkmalen des Anspruchs 1 gelöst.

Die erfindungsgemäße Vorrichtung umfasst eine Ebene mit einer Stellfläche für das Kraftfahrzeug. Über der Ebene ist ein Rahmen angeordnet, der aus Rahmenleisten zusammengesetzt ist, zwischen denen die aufzubringende Folie gespannt ist. Üblicherweise handelt es sich hierbei um einen rechteckigen Rahmen, der deutlich größer bemessen ist als die Stellfläche. Der Rahmen lässt sich aus einer über der Ebene angehobenen Position bis zur Ebene hin absenken. Ferner ist eine Saugeinrichtung vorhanden, die Luft nach unten durch eine oder mehrere Saugöffnungen absaugt, die in oder unter der Ebene angeordnet ist bzw. sind.

Die in den Rahmen eingespannte Folie kann durch eine Abwärtsbewegung des Rahmens bis auf die Ebene über die Karosserie des Fahrzeugs gespannt werden. Gleichzeitig wird die Folie durch den Sog der Saugeinrichtung von unten möglichst gleichmäßig auf das Fahrzeug gezogen und schmiegt sich an die Karosserieflächen an. Versuche habe gezeigt, dass dieses Anschmiegen so gleichmäßig erfolgt, dass die Folie anschließend nur noch im Bereich der Unterkante des Fahrzeugs abgeschnitten werden muss und an den Fugen der Türen, der Motorhaube und dergleichen, sowie an den Fenster- und Scheinwerferflächen usw. aufgeschnitten werden muss. Ein aufwendiges Positionieren und Anstreichen der Folie von Hand durch ein Rakelwerkzeug erübrigt sich weitgehend, bis auf gegebenenfalls noch vorzunehmende Nacharbeiten. Die Vorrichtung bietet daher eine erhebliche Erleichterung beim Aufbringen der Folie.

Gemäß einer bevorzugten Ausführungsform der vorliegenden Erfindung umfassen die Rahmenleisten Klemmprofile zum Festklemmen der Ränder der Folie und flexible Lippen, die entlang der Klemmprofile angeordnet sind, wobei die Rahmenleisten aus einer Ausgangsposition, in der die Folie zwischen gegenüberliegenden Klemmprofilen frei gespannt ist und in der die flexiblen Lippen über der Folie angeordnet sind, abwärts nach außen schwenkbar sind, derart, dass die Lippen während der Schwenkbewegung nach unten gegen die Oberseite der Folie gedrückt werden. Das Schwenken der Rahmenleisten dient zum weiteren Spannen und Dehnen der Folie zwischen den gegenüberliegenden Klemmprofilen. Die Lippen tragen nicht nur zum Spannen der Folie bei, sondern dienen auch zur Abdichtung des Rahmens an den Rändern der Ebene, derart, dass die Sogwirkung durch die Saugöffnungen in vollem Umfang auf den Bereich unter dem Fahrzeug wirken kann und keine Luft seitlich von außen unter dem Rahmen hindurch eingesaugt wird.

Gemäß einer weiteren bevorzugten Ausführungsform ist die Stellfläche auf einer anhebbaren Bühne zur Aufnahme des Kraftfahrzeugs vorgesehen. Eine angehobene Position des Kraftfahrzeugs begünstigt das Anschmiegen der Folie an dessen unteren Karosseriebereichen.

Weiter vorzugsweise wird die Ebene durch Gitterroste gebildet. Diese werden durch die Matten zur Abdeckung der Saugöffnungen in beliebiger Weise abgedeckt.

Gemäß einer weiteren bevorzugten Ausführungsform umfasst die erfindungsgemäße Vorrichtung Matten zur Abdeckung der Saugöffnung(en) im Bereich um die Stellfläche des Kraftfahrzeugs. Die Matten sind frei positionierbar und können so ausgelegt werden, dass der Sog unmittelbar unter der Stellfläche wirkt, was das Anschmiegen weiter begünstigt.

Gemäß einer weiteren Ausführungsform ist bzw. sind die Saugöffnung(en) unmittelbar unter dem Kraftfahrzeug oder der Bühne angeordnet.Im folgenden wird ein bevorzugtes Ausführungsbeispiel der vorliegenden Erfindung anhand der Zeichnung näher erläutert.
- Fig. 1 bis 4: sind schematische Darstellungen einer Abfolge von Einzelschritten des Vorgangs zum Aufbringen einer Folie auf ein Kraftfahrzeug mittels einer Ausführungsform der erfindungsgemäßen Vorrichtung;
- Fig. 5 und 6: sind Detailansichten des Rahmens in verschiedenen Schwenkpositionen der Rahmenleistungen; und
- Fig. 7: ist eine Draufsicht auf die Ebene mit der Stellfläche zur Aufnahme des Kraftfahrzeugs.

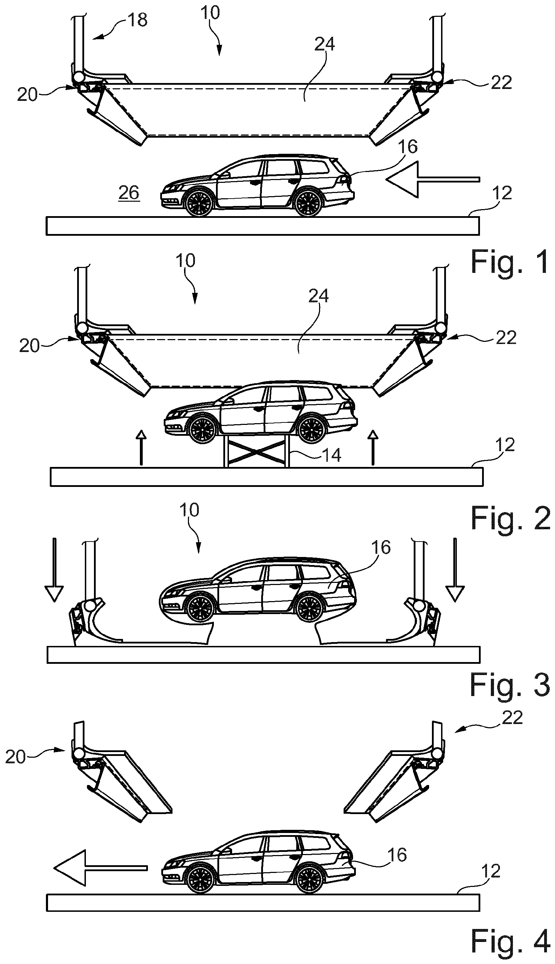

Die in Fig. 1 dargestellte Vorrichtung 10 zum Aufbringen einer Folie auf ein Kraftfahrzeug umfasst eine horizontale Ebene 12, auf der eine nicht näher dargestellte Bühne 14 angeordnet ist, auf der ein Kraftfahrzeug 16 abstellbar ist. Die Bühne 14 ist gegenüber der Ebene 12 anhebbar.

Über der Ebene 12 ist ein rechteckiger Rahmen 18 angeordnet, der aus einzelnen Rahmenleisten 20,22 zusammengesetzt ist. In Fig. 1 sind lediglich zwei gegenüberliegende horizontal und parallel verlaufende Rahmenleisten 20,22 dargestellt, die durch zwei weitere, dazu rechtwinklig verlaufende Rahmenleisten (nicht näher dargestellt) zu einem Rechteck ergänzt werden. Zwischen den Rahmenleisten 20,22 ist eine Folie 24 horizontal gespannt.

Der Rahmen 18 ist aus der in Fig. 1 dargestellten angehobenen Position zur Ebene 12 hin absenkbar.

Die Ebene 12 ist auf in Fig. 1 nicht näher gestellte Weise mit Saugöffnungen ausgestattet, durch welche sich Luft aus dem Bereich 26 oberhalb der Ebene 12 nach unten absaugen lässt. Hierzu dient eine ebenfalls nicht näher gezeigte Saugeinrichtung, also etwa eine Vakuumpumpe.

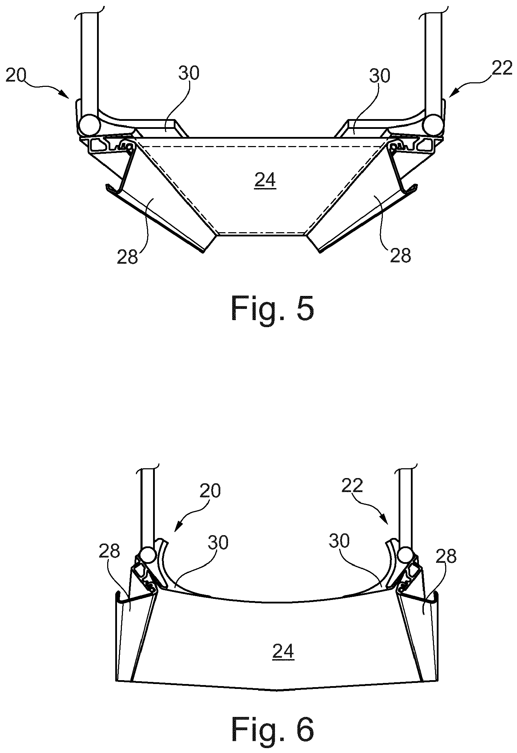

Die Rahmenleisten 20,22 umfassen, wie in den folgenden Fig. 5 und 6 näher dargestellt ist, Klemmprofile 28 zum Festklemmen der Ränder der Folie 24, und flexible Lippen 30, also etwa Gummilippen, die horizontal entlang der Klemmprofile 28 angeordnet sind. In der in Fig. 5 dargestellten Ausgangsposition sind die Nuten der einander gegenüberliegenden Klemmprofile 28, zwischen denen die Folie 24 gespannt ist, einander zugewandt. Die Lippen 30 sind in dieser Ausgangsposition über der Folie 24 angeordnet. Es wird angemerkt, dass die Darstellung der einzelnen Teile in den Figuren nicht maßstäblich ist und insbesondere die Proportionen der Teile in der Realität davon abweichen können.

Die Klemmprofile 28 sind jeweils um eine horizontale Achse, die ihrer Längsrichtung entspricht, nach unten abwärts in die Position in Fig. 6 schwenkbar. Hierbei werden die Lippen 30 nach unten gegen die Oberseite der Folie 24 gedrückt, und die Folie 24 wird weiter gespannt.

Gemäß Fig. 2 wird das Kraftfahrzeug 16 zunächst auf der Stellfläche angeordnet und durch die Bühne 14 angehoben. Anschließend wird der Rahmen 18 nach unten abgesenkt, so dass die Folie 24 über die Karosserie des Kraftfahrzeugs 16 gezogen wird. Gleichzeitig wird die Saugeinrichtung zum Ansaugen von Luft nach unten durch die Saugöffnungen betrieben.

Gemäß Fig. 3 werden beim Erreichen der Ebene 12 die Klemmprofile 28 aus der Ausgangsposition in Fig. 5 nach unten und außen (wie in Fig. 6 dargestellt) geschwenkt, so dass die Lippen 30 die Folie 24 an ihren Rändern nach unten gegen die Ebene drücken. Hierdurch wird eine Abdichtung des Rahmens 18 nach außen erreicht und verhindert, dass Luft seitlich von außen unter dem Rahmen durchtreten kann. Wie in Fig. 3 dargestellt, führt die Sogwirkung der Saugeinrichtung zu einem Anschmiegen der Folie 24 auf die Karosserie des Kraftfahrzeugs 16 beginnend mit dem Dach über die Seitenflächen nach unten. Wird der Sog bevorzugt in einem Bereich unter der Bühne 14 ausgeübt, ergibt sich vorzugsweise eine schlauchförmige Ausbildung der Folie 24 um den Unterbau des Fahrzeugs bzw. die Bühne 14.

Das Kraftfahrzeug 16 ist nun vollständig mit der Folie beklebt. Noch von Hand vorzunehmende Arbeiten betreffen das Abschneiden des Folienschlauchs am Unterbau des Fahrzeugs, das Auftrennen der Folie 24 an den Fugen der Türen, der Motorhaube und dergleichen, sowie das Ausschneiden von Fenster- und Scheinwerferflächen.

Nach dem Anheben des Rahmens 18, wie in Fig. 3 dargestellt, steht das Fahrzeug frei und kann entfernt werden.

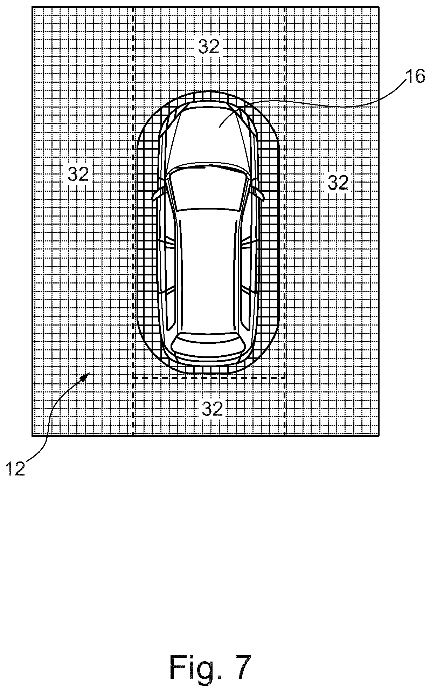

Wie in Fig. 7 dargestellt, ist die Ebene 12 aus Gitterrosten zusammengesetzt, durch welche die Sogwirkung der Saugeinrichtung gleichförmig wirken kann. Wie oben bereits im Zusammenhang mit Fig. 3 beschrieben, ist es erwünscht, die Sogwirkung vorzugsweise unmittelbar unter der Stellfläche des Fahrzeugs 16 wirken zu lassen. Dies kann durch Abdeckung der Saugöffnungen in den Gitterrosten im Bereich um die Stellfläche des Kraftfahrzeugs 16 herum erreicht werden. Hierzu dienen in der vorliegenden Ausführungsform Matten 32, die um das Kraftfahrzeug 16 herum auf der Ebene 12 verteilt werden und die Saugöffnungen in diesen Bereichen abdecken. Überdies kann die Saugeinrichtung in jedem Fall effizienter arbeiten, da der Sog lediglich in dem relativ kleinen Bereich der Stellfläche des Kraftfahrzeugs 16 bzw. unter der Bühne 14 ausgeübt wird. Alternativ können die Saugöffnungen auch unmittelbar unter dem Kraftfahrzeug 16 bzw. unter der Bühne 14 angeordnet sein.

Bei der Folie 24 kann es sich wahlweise um eine Dekorfolie handeln, oder aber um eine transparente Schutzfolie zum Schutz des Lacks, mit dem die Karzeugkarosserie lackiert ist und welche bei vor der Auslieferung eines Neufahrzeugs oder zum zeitweiligen Schutz auf das Kraftfahrzeugs 16 aufgebracht wird. Die Folie 24 kann auch die Funktion einer Dekorfolie und einer Schutzfolie vereinigen.

## Patentansprüche

1. Vorrichtung (10) zum Aufbringen einer Folie auf ein Kraftfahrzeug, **gekennzeichnet durch**
eine Ebene (12) mit einer Stellfläche zur Aufnahme des Kraftfahrzeugs (16),
einen Rahmen (18), der aus Rahmenleisten (20, 22) zusammengesetzt ist, zwischen denen eine Folie (24) gespannt ist und aus einer über die Ebene (12) angehobenen Position zur Ebene (12) hin absenkbar ist, und
eine Saugeinrichtung zum Ansaugen von Luft nach unten **durch** mindestens eine Saugöffnung, die in oder unter der Ebene (12) angeordnet ist.

2. Vorrichtung gemäß Anspruch 1, **dadurch gekennzeichnet, dass** die Rahmenleisten (20, 22) Klemmprofile (28) zum Festklemmen der Ränder der Folie (24) und flexible Lippen (30) umfassen, die entlang der Klemmprofile (28) angeordnet sind, und dass die Rahmenleisten (20, 22) aus einer Ausgangsposition, in der die Folie (24) zwischen gegenüber liegenden Klemmprofilen (28) frei gespannt ist und in der die flexible Lippen (30) über der Folie (24) angeordnet sind, abwärts nach außen schwenkbar sind, derart, dass die Lippen (30) während der Schwenkbewegung nach unten gegen die Oberseite der Folie (24) gedrückt werden.

3. Vorrichtung gemäß Anspruch 1 oder 2, **dadurch gekennzeichnet, dass** die Stellfläche auf einer anhebbaren Bühne (14) zur Aufnahme des Kraftfahrzeugs (16) vorgesehen ist.

4. Vorrichtung gemäß einem der Ansprüche 1 bis 3, **dadurch gekennzeichnet, dass** die Ebene (12) durch Gitterroste gebildet wird.

5. Vorrichtung gemäß einem der Ansprüche 1 bis 4, **gekennzeichnet durch** Matten (32) zur Abdeckung der Saugöffnung(en) im Bereich um die Stellfläche des Kraftfahrzeugs (16).

6. Vorrichtung gemäß einem der Ansprüche 1 bis 5, **dadurch gekennzeichnet, dass** die Saugöffnung(en) unmittelbar unter dem Kraftfahrzeug (16) oder der Bühne (14) angeordnet ist bzw. sind.
